Europäisches Patentamt

European Patent Office

Office européen des brevets

(11) Veröffentlichungsnummer : **0 430 984 B1**

(19)

(12)                    **EUROPÄISCHE PATENTSCHRIFT**

(45) Veröffentlichungstag der Patentschrift :
09.12.92 Patentblatt 92/50

(51) Int. Cl.⁵ : **B23B 3/26,** B23B 29/034,
B23Q 15/02

(21) Anmeldenummer : 89909155.7

(22) Anmeldetag : 17.08.89

(86) Internationale Anmeldenummer :
PCT/DE89/00539

(87) Internationale Veröffentlichungsnummer :
WO 90/02010 08.03.90 Gazette 90/06

(54) **FEINBOHRMASCHINE UND VERFAHREN ZUR HERSTELLUNG VON BOHRUNGEN MIT POLAR UND/ODER AXIAL BELIEBIGEN MANTELLINIENVERLAUFEN.**

(30) Priorität : 25.08.88 DE 3828854

(43) Veröffentlichungstag der Anmeldung :
12.06.91 Patentblatt 91/24

(45) Bekanntmachung des Hinweises auf die
Patenterteilung :
09.12.92 Patentblatt 92/50

(84) Benannte Vertragsstaaten :
DE FR GB IT

(56) Entgegenhaltungen :
WO-A-87/00473
DE-A- 1 920 939

(56) Entgegenhaltungen :
DE-B- 2 167 082
US-A- 3 391 585
US-A- 4 195 957
US-A- 4 412 465
US-A- 4 671 145

(73) Patentinhaber : MAHLE GMBH
Pragstrasse 26-46 Postfach 50 07 69
W-7000 Stuttgart 50 (DE)

(72) Erfinder : BATHEN, Roland
Hölderlinstr. 31
W-7251 Weissach (DE)
Erfinder : MUSIOL, Werner
Biberweg 53
W-7014 Kornwestheim (DE)

EP 0 430 984 B1

Jouve, 18, rue Saint-Denis, 75001 PARIS

**Beschreibung**

Die Erfindung betrifft eine Feinbohrmaschine zur Herstellung von Bohrungen mit polar und/oder axial beliebigen Mantellinienverläufen nach dem Oberbegriff des Patentanspruchs 1.

Eine solche Bohrmaschine ist aus DE 32 45 053 A1 bekannt. Es ist mit jener Bohrmaschine möglich, Bohrungen mit polar und/oder axial beliebigen Mantellinienverläufen herzustellen. Erreicht wird dies dort durch eine längs geteilte Bohrstange aus miteinander verbundenen unterschiedlichen Materialien, die innerhalb eines von außen angelegten Magnetfeldes durch von dem Magnetfeld verursachte magnetostriktive Längenänderung radial gegenüber der Rotationsachse auslenkbar ist.

Bei Drehmaschinen ist es aus DE 34 46 306 A1 darüber hinaus bekannt, den Halter des Werkzeuges mit einem elastisch biegsamen Bereich zu versehen und mit Hilfe eines piezoelektrischen Stellmotor zur Erzeugung feiner Werkzeug-Zustellbewegungen auszulenken.

Ausgehend von der DE 32 45 053 A1 liegt der Erfindung die Aufgabe zugrunde, die Auslenkung des Werkzeuges mit Hilfe eines piezoelektrischen Stellmotors ohne Verwendung magnetischer Antriebe auf sichere und konstruktiv einfache Weise zu erreichen.

Gelöst wird diese Aufgabe durch eine Ausführung der gattungsgemäßen Bohrmaschine nach den kennzeichnenden Merkmalen des Patentanspruchs 1.

Durch die erfindungsgemäß vorgeschlagene Übertragung der von dem Stellmotor ausgehenden Antriebskraft mit einer Schubstange auf den auslenkbaren Werkzeughalter ist es möglich, Stellantriebe zu verwenden, die wegen ihrer Größe nicht innerhalb der den Werkzeughalter lagernden Bohrstange untergebracht werden können.

Zweckmäßige Ausgestaltungen der Erfindung sind Gegenstand der Unteransprüche.

Zur exakten Bearbeitung der Bohrungen nach einer genau definierten Form wird vorgeschlagen, die jeweilige Ist-Lage des Werkzeuges bei der Bearbeitung über eine mit dem Werkzeug direkt oder indirekt in Verbindung stehende Meßeinrichtung zu erfassen und mit dem gewünschten dem Stellmotor vorgegebenen Soll-Wert zu vergleichen. Für den Fall einer Abweichung zwischen beiden Werten sind die dem Stellmotor einzugebenden Steuergrößen in Richtung auf einen Abbau der festgestellten Abweichung zu korrigieren. Diese Korrektur wird durch die Verwendung eines an sich bekannten Lageregelkreises bei der Steuerung des Stellmotors erreicht.

Ein Ausführungsbeispiel ist in der Zeichnung dargestellt. Es zeigen

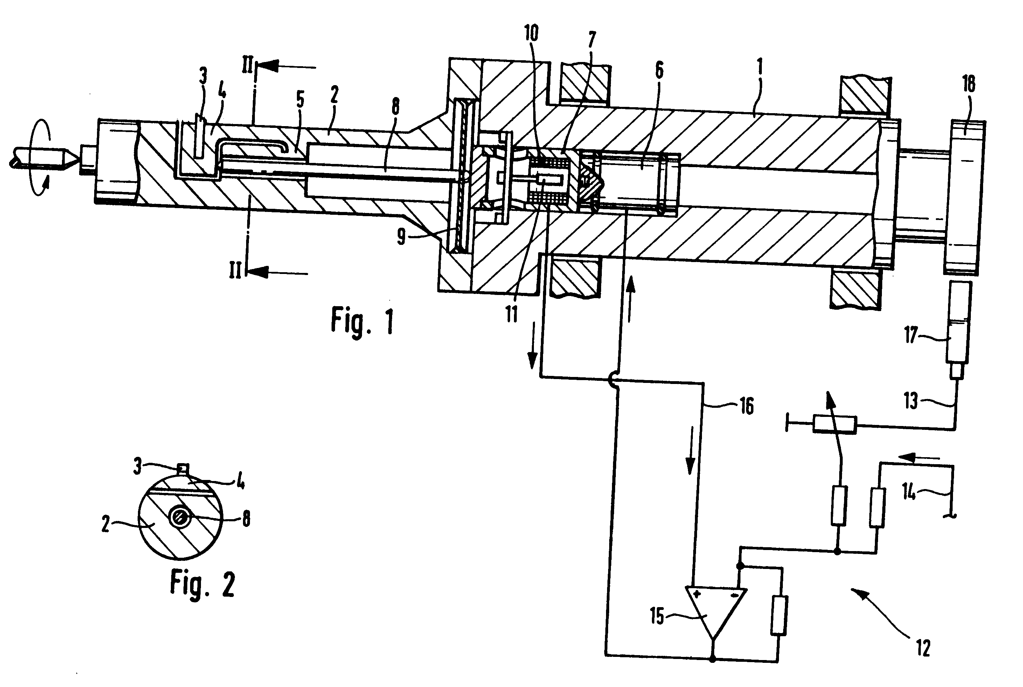

Fig. 1 einen Längsschnitt durch eine mit der Arbeitsspindel einer Feinbohrmaschine verbundenen Bohrstange zusammen mit einem Schaltbild für die Regelung des Stellmotorantriebs

Fig. 2 einen Schnitt durch die Bohrstange nach Linie II - II in Fig. 1

An der Arbeitsspindel 1 einer im einzelnen nicht dargestellten Feinbohrmaschine ist eine Bohrstange 2 auswechselbar befestigt. Ein Drehmeißel 3 ist fest mit einem Werkzeughalter 4 verbunden. Der Werkzeughalter 4 ist gegenüber der Rotationsachse der Bohrstange 2 federnd auslenkbar. Mit der Bohrstange 2 direkt verbunden ist der Werkzeughalter 4 lediglich über den Steg 5. Der Werkzeughalter 4 ist aus dem Material der Bohrstange 2 und aus dieser durch Elektroerosion abgetrennt.

Die radiale Auslenkung des Werkzeughalters 4 bewirkt ein in der Arbeitsspindel 1 angeordneter pietzoelektrischer Stellmotor 6. Über ein Zwischenstück 7 überträgt der Stellmotor 6 seine Stellbewegungen auf eine in der Rotationsachse der Bohrstange angeordnete Schubstange 8 auf das freie Ende des Werkzeughalters 4. Die Schubstange 8 greift an dem Werkzeughalter 4 derart an bzw. ist mit diesem derart verbunden, daß bei einem Auslenken des Werkzeughalters 4 keine radialen Relativbewegungen zwischen diesem und der Schubstange 8 auftreten.

An ihrem dem Stellmotor 6 zugewandten Ende ist die Schubstange 8 in einer senkrecht zur Antriebsrichtung verlaufenden Membran 9 gelagert. Die Membran 9 kann mit der abnehmbaren Bohrstange oder mit der Arbeitsspindel fest verbunden sein.

Das Zwischenstück 7 dient als Meßgerät für die Größe der von dem Stellmotor 6 jeweils ausgehenden Zustellbewegungen. Zu diesem Zweck ist das Zwischenstück 7 als Wegaufnehmer ausgebildet. Die Funktion als Wegaufnehmer wird durch den Einsatz einer Induktionsspule 10 bewirkt, indem in diese ein magnetisierbares fest mit der Arbeitsspindel 1 verbundenes Metallteil 11 eingreift.

Die Soll-Form der zu erzeugenden Bohrung kann durch ein elektronisches Abbild vorgegeben sein. Aus diesem elektronischen Abbild können dem Stellmotor 6 die zur Auslenkung erforderlichen Impulse aufgegeben werden.

Da von der Anlage insgesamt Störfaktoren ausgehen, die beispielsweise von einer Veränderung der Temperatur des Stellmotores 6 bzw. der diesen umgebenden Teile der Arbeitsspindel 6 erzeugt werden können, wird die tatsächliche Antriebsbewegung des Stellmotors kontinuierlich durch das als Wegaufnehmer ausgebildete Zwischenstück 7 ermittelt. Der so gemessene jeweilige Ist-Wert der Zustellbewegung des Stellmotors 6 wird einem Lageregelkreis 12 zugeführt. Als weitere Größen werden diesem Lageregelkreis zugeführt die Soll-Form für die zu erzeugende Bohrung, wobei die polare Komponente über die Leitung 13 und die axiale Komponente (Mantellinienverlauf der Bohrung in axialer Richtung) über die Leitung 14 jeweils zugeführt werden. In einem Vergleicher 15, dem über eine Leitung 16 der in dem Zwischenstück 7 gemessene Ist-Wert zugeführt wird, wird die von den Störgrößen bereinigte dem Stellmotor 6 zuzuführende Stellgröße laufend erzeugt.

Anstelle über ein elektronisches Abbild kann die Soll-Form der zu erzeugenden Bohrung auch durch einen induktiven Taster 17 einer mit der Arbeitsspindel umlaufenden Schablone 18 entnommen werden. Die Schablone 18 weist die Unrundform der zu erzeugenden Bohrung auf.

Die Zustellbewegungen, die mit der beschriebenen erfindungsgemäßen Einrichtung bei dem Drehmeißel 3 erzeugt werden können, sind auf wenige Zehntel Milimeter beschränkt. Soweit Bohrungen mit darüber hinausgehenden Durchmesserunterschieden erzeugt werden sollen, müssen Bohrstangen mit unterschiedlichen Durchmessern verwendet werden. Es müssen also eine Reihe von Bohrstangen parat gehalten werden, um im Durchmesser unterschiedlich große Bohrungen bearbeiten zu können. Aus diesem Grunde ist es äußerst vorteilhaft, daß der Stellmotor 6 nicht direkt innerhalb der Bohrstange 2 angeordnet ist. Denn dann müßte jede Bohrstange mit einem getrennten Stellmotor ausgerüstet sein, was unwirtschaftlich ist. Bei einer Anordnung des Stellmotores in der Bohrstange käme noch hinzu, daß jedes Mal eine elektrische Verkabelung gegenüber der Arbeitsspindel 1 erfolgen müßte. Um eine solche Verkabelung bei einem Bohrstangenwechsel zu vermeiden, ist es auch vorteilhaft, die Meßeinrichtung für die Erfassung des Zustellbewegungs-Ist-Wertes in der Arbeitsspindel 1 vorzusehen. Hierbei wird in Kauf genommen, daß außerhalb der Arbeitsspindel auftretende Störfaktoren nicht erfaßt werden können. Dieses Vorgehen ist akzeptabel, da außerhalb der Arbeitsspindel keine nennenswerten Störfaktoren auftreten.

## Patentansprüche

1. Feinbohrmaschine mit einem Drehmeißel an einer um eine Achse rotierenden Bohrstange, der tangential zur Rotationsbewegung an einem Werkstück angreift und radial federnd auslenkbar ist, zur Herstellung von Bohrungen mit polar und/oder axial beliebigen Mantellinienverläufen, **gekennzeichnet** durch die Merkmale:
   a) der Drehmeißel (3) ist in einem federnd gelagerten über einen translatorisch antreibenden Stellmotor (6) auslenkbaren Werkzeughalter (4) befestigt,
   b) die Antriebsrichtung des Stellmotors (6) verläuft senkrecht zur Zustellrichtung des Drehmeißels (3),
   c) die Antriebskraft des Stellmotors (6) wirkt auf das eine Ende einer getrennt von dem Stellmotor (6) gelagerten Schubstange (8),
   d) das zweite Ende der Schubstange (8) greift an dem freien auslenkbaren Ende des Werkzeughalters (4) in einer diesem gegenüber fixierten Lage an,
   e) die Schubstange (8) ist an ihrem ersten Ende an einer senkrecht zur Antriebsrichtung verlaufenden Membran (9) befestigt.

2. Feinbohrmaschine nach Anspruch 1 oder 2, dadurch **gekennzeichnet**, daß der Drehmeißel (3) an einer lösbar mit der Arbeisspindel (1) verbundenen Bohrstange (2) und der Stellmotor (6) in der Arbeitsspindel (1) befestigt sind, wobei die Membran (9) in der Bohrstange (2) gelagert ist.

3. Feinbohrmaschine nach einem der vorhergehenden Ansprüche, dadurch **gekennzeichnet**, daß der federnd auslenkbare Werkzeughalter (4) aus dem Material der im wesentlichen runden Bohrstange (2) als eine nur noch in Richtung zur Bohrstangenachse angelenkte nach radial innen abgewinkelte lasche durch elektroerosiven Materialabtrag getrennt ist.

4. Feinbohrmaschine nach einem der vorhergehenden Ansprüche, dadurch **gekennzeichnet**, daß der Stellmotor (6) nach dem piezoelektrischen Prinzip arbeitet.

5. Verfahren zum Betrieb einer Feinbohrmaschine nach einem der vorhergehenden Ansprüche, dadurch **gekennzeichnet**, daß die zu erzeugende Form der Bohrung als elektronisches Abbild vorgegeben wird, aus dem der Stellmotor seine Steuerimpulse erhält, wobei die sich aus diesen Steuerimpulsen tatsächlich einstellenden Auslenkungen des Werkzeughalters direkt oder indirekt gemessen und innerhalb eines Lageregelkreises mit dem aus dem elektrischen Abbild vorgegebenen Soll-Werten verglichen werden, um eine evtl. Abweichung zwischen diesen Werten durch entsprechende Korrektur der den Stellmotor steuernden Impulse abzubauen.

6. Verfahren nach Anspruch 5, dadurch **gekennzeichnet**, daß eine Meßeinrichtung (10, 11) zur Erfassung der Stellmotor-(6)Stellwege irnnerhalb der Arbeitsspindel (1) angeordnet ist.

## Claims

1. Fineboring machine with a turning tool on a boring rod which rotates about an axis, which attaches to a tool tangentially to the direction of rotation and can be deflected radially by spring action, for producing bores with any polar and/or axial generating line, characterized by the features:

a) the turning tool (3) is mounted in a spring-mounted tool holder (4) which can be deflected via a translatory driving servomotor (6),

b) the driving direction of the servomotor (6) is perpendicular to the operating direction of the turning tool (3),

c) the driving force of the servomotor (6) acts on the one end of a connecting rod (8) which is mounted separately from the servomotor (6),

d) the second end of the connecting rod (8) attaches to the free, deflectable end of the tool holder (4), in a fixed position relative to the latter. tool holder (4), in a fixed position relative to the latter.

e) the connecting rod (8) is attached to a membrane (9) which runs perpendicular to the driving direction at its first end.

2. Fineboring machine according to Claim 1 or 2, characterized by the fact that the turning tool (3) is attached to a boring bar (2) removably connected with the work spindle (1), and the servomotor (6) is attached in the work spindle (1), with the membrane (9) being mounted in the boring bar (2).

3. Fineboring machine according to one of the preceding Claims, characterized by the fact that the tool holder (4), which is made from the material of the essentially round boring bar (2) and can be deflected by spring action, is separated as a bracket which is still hinged on only in the direction towards the boring rod axis, angled off radially to the inside, by means of electroerosive material removal.

4. Fineboring machine according to one of the preceding Claims, characterized by the fact that the servomotor (6) functions according to the piezoelectric principle.

5. Process for operation of a fineboring machine according to one of the preceding Claims, characterized by the fact that the shape of the bore to be produced is pre-set as an electronic image, from which the servomotor receives its control pulses, with the excursions of the tool holder actually resulting from these control pulses being measured directly or indirectly and compared with the reference values pre-set from the electric [sic] image within a position control circuit, in order to reduce any deviation between these values by a suitable correction of the pulses controlling the servomotor.

6. Process according to Claim 5, characterized by the fact that a measurement device (10, 11) to determine the servomotor (6) setting paths is arranged within the work spindle (1).

## Revendications

1. Perceuse de précision avec un outil de tournage monté sur une tige de perçage tournant sur un axe, agissant, tangentiellement au mouvement de rotation, sur une pièce façonnée et orientable élastiquement et radialement, pour la réalisation d'alésages à génératrices polaires et/ou axiales déterminées, caractérisée par les caractéristiques suivantes :

(a) l'outil de tournage (3) est fixé dans un porte-outil (4) à montage élastique, orientable par l'intermédiaire d'un servomoteur (6) à entraînement en translation,

(b) le sens d'entraînement du servomoteur (6) s'étend perpendiculairement au sens d'avance de l'outil de tournage (3),

(c) la force d'entraînement du servomoteur (6) agit sur une première extrémité d'une tige de poussée (8), montée séparée du servomoteur (6),

(d) la deuxième extrémité de la tige de poussée (8) agit sur l'extrémité orientable libre du porte-outil (4), dans une position fixée par rapport à celui-ci,

(e) la tige de poussée (8) est fixée à une première extrémité sur une membrane (9) s'étendant perpendiculairement à la direct ion d'entraînement.

2. Perceuse de précision selon la revendication 1, caractérisée en ce que l'outil de tournage (3) est fixé sur une tige de perçage (2) reliée à la broche de travail (1) et le servomoteur (6) est fixé dans la broche de travail (1), la membrane (9) étant montée dans la tige de perçage (2).

3. Perceuse de précision selon l'une des revendications précédentes, caractérisée en ce que le porte-outil (6) orientable élastiquement est séparé, au moyen d'un enlèvement de métal opéré par électroérosion, du matériau de la tige de perçage (2), sensiblement ronde, pour former une attache encore articulée en direction de la tige de perçage et coudée radialement vers l'intérieur.

4. Perceuse de précision selon l'une des revendications précédentes, caractérisée en ce que le servomoteur (6) travaille suivant le principe piézoélectrique.

5. Procédé de fonctionnement d'une perceuse de précision selon l'une des revendications précédentes, caractérisé en ce que la forme à produire pour l'alésage est prédéterminé sous forme d'une représentation électronique, à partir de laquelle le servomoteur reçoit ses impulsions de commande, les déplacements d'orientation de porte-outil, effectivement opérés à partir de ces impulsions de commande, étant mesurés directement ou indirectement, et comparés, dans un circuit de réglage de position, à la valeur de consigne prédéterminée à partir de la représentation électronique, afin d'annuler tout écart éventuel entre ces valeurs, grâce à une correction des impulsions assurant la commande du servomoteur.

6. Procédé selon la revendication 5, caractérisé en ce qu'un dispositif de mesure (10,11) destiné à mesurer la course de réglage du servomoteur (6) est disposé à l'intérieur de la broche de travail (1).

Fig. 1

Fig. 2